# EUROPÄISCHE PATENTANMELDUNG

(11) **EP 2 495 457 A2**
(43) Veröffentlichungstag der Anmeldung: **05.09.2012**
(21) Anmeldenummer: 12155316.8
(22) Anmeldetag: 14.02.2012
(51) Int. Cl.: F16B 25/00

(54) **Verbundschraube für ein Holz-Beton-Tragwerk**

(30) Priorität: 01.03.2011 DE 102011012776
(71) Anmelder: Rupprecht, Holger, 79183 Waldkirch (DE)
(72) Erfinder: Rupprecht, Holger, 79183 Waldkirch (DE)
(74) Vertreter: Fischer, Michael

(57) **Zusammenfassung**

Die vorliegende Erfindung offenbart eine Verbundschraube (2) für ein Holz-Beton-Tragwerk, umfassend einen Bolzenschaft (6), der eine Längsachse der Verbundschraube (2) definiert, wobei der Bolzenschaft (6) entlang der Längsachse einen angeformten Schraubenkopf (4), einen Verankerungsabschnitt (16) und einen Holzeingriffgewindeabschnitt (14) aufweist, **dadurch gekennzeichnet, dass** der Holzeingriffgewindesabschnitt (14)
a) auf der vom Schraubenkopf (4) abgewandten Seite des Bolzenschafts (6) in einem konisch verlaufenden Eintrittsbereich (8) einen ersten Gewindesabschnitt mit einer ersten Gewindesteigung aufweist,
b) in einem mit weitgehend konstantem Durchmesser verlaufenden Befestigungsbereich (12) einen zweiten Gewindeabschnitt mit einer zweiten Gewindesteigung aufweist, wobei die erste Gewindesteigung kleiner als die zweite Gewindesteigung ist, und
c) in einem Übergangsbereich (10), der den Eintrittsbereich (8) und den Befestigungsbereich (12) verbindet, sichelartige Gewindeansätze (18) aufweist, deren Verlauf eine Längsausdehnung in Richtung der Längsachse des Bolzenschafts (6) und eine Querausdehnung in Richtung senkrecht zur Längsachse aufweisen, wobei die Längsausdehnug ein Vielfaches der Querausdehnung beträgt, und
d) der Verankerungsabschnitt (16) im Anschluss an den Holzeingriffsgewindeabschnitt (14) zunächst weitere sicherartige Gewindeansätze (20) und daran anschliessend in Richtung auf den Schraubenkopf (4) gesehen einen dritter Gewindebereich mit einer dritten Gewindesteigung, die grösser als die erste und zweite Gewindesteigung ist, aufweist.

## Beschreibung

Die vorliegende Erfindung betrifft eine Verbundschraube für ein Holz-Beton-Tragwerk, umfassend einen Bolzenschaft, der eine Längsachse der Verbundschraube definiert, wobei der Bolzenschaft entlang der Längsachse einen angeformten Schraubenkopf, einen Verankerungsabschnitt und einen Holzeingriffgewindeabschnitt aufweist.

Eine derartige Verbundschraube ist beispielsweise aus der europäischer Patentanmeldung EP 0 984 177 A1 bekannt. Solche Verbundschrauben werden in der Konstruktion von neuen Häusern, Werkhallen und in der Altbausanierung eingesetzt, wobei ein hoher Bedarf an statisch einwandfreien Verbindungen von Holzbalken/Holzrahmen mit Betonelementen besteht. Derartige Betonelemente werden mit den Holzbalken/Holzrahmen zu sogenannten Holz/Beton-Verbundtragwerken zusammengefügt und werden beispielsweise als Wände, Tragdecken oder (Fertig-)Dachelemente eingesetzt. Diese Holz/Beton-Verbundtragwerke haben gegenüber dem reinen Holzbau den Vorteil, dass sie trotz des Betonanteils dennoch vergleichsweise leicht sind und trotz des Holzanteils dennoch noch eine genügend hohe Wärmespeichermasse aufweisen. Weiter verbessern derartige Tragwerke die akustischen Eigenschaften eines Gebäudes entscheidend und haben ebenfalls eine gute Feuerwiderstandsdauer. Mit dem verbesserten Schallschutzverhalten verringern sie zudem spürbare Schwingungen von Böden und steifen somit das Gebäude statisch hervorragend aus. Abgesehen von diesen technischen Vorteilen befriedigen die sichtbaren Holzbalken auch die ästhetischen Wünsche der Bauherrschaft.

Die in o.g. EP-Anmeldung beschriebene Verbundschraube wird mit dem Holzeingriffgewindeabschnitt in den Holzelement eingeschraubt und weist mit dem Verankerungsabschnitt einen zunächst aus dem Holzelement herausragenden Abschnitt auf, der später in Beton eingegossen wird. Diese Verbundschrauben werden häufig auch unter einem Winkel in das Holzelement eingeschraubt, um den statischen Zugkräften entsprechend Rechnung tragen zu können.

Ausgehend von diesem Stand der Technik liegt der vorliegenden Erfindung daher die Aufgabe zugrunde, eine Verbundschraube anzugeben, die auch unter den typischerweise vorgesehenen Winkel sehr schnell im Holz fasst, einen guten Vortrieb ermöglicht und den später in Beton einzugiessenden Teil klar für den Monteur erkennen lässt.

Diese Aufgabe wird bei einer Verbundschraube der eingangs genannten Art erfindungsgemäss dadurch gelöst, dass der Holzeingriffgewindesabschnitt
a) auf der vom Schraubenkopf abgewandten Seite des Bolzenschafts in einem konisch verlaufenden Eintrittsbereich einen ersten Gewindesabschnitt mit einer ersten Gewindesteigung aufweist,
b) in einem mit weitgehend konstantem Durchmesser verlaufenden Befestigungsbereich einen zweiten Gewindeabschnitt mit einer zweiten Gewindesteigung aufweist, wobei die erste Gewindesteigung kleiner als die zweite Gewindesteigung ist, und
c) in einem Übergangsbereich, der den Eintrittsbereich und den Befestigungsbereich verbindet, sichelartige Gewindeansätze aufweist, deren Verlauf eine Längsausdehnung in Richtung der Längsachse und eine Querausdehnung in Richtung senkrecht zur Längsachse aufweisen, wobei die Längsausdehnug ein Vielfaches der Querausdehnung beträgt, und der Verankerungsabschnitt im Anschluss an den Holzeingriffsgewindeabschnitt zunächst weitere sicherartige Gewindeansätze und daran anschliessend in Richtung auf den Schraubenkopf gesehen einen dritter Gewindebereich mit einer dritten Gewindesteigung, die grösser als die erste und zweite Gewindesteigung ist, aufweist.

Auf diese Weise ist eine Verbundschraube geschaffen, die sich auch unter ungünstigen Winkeln ohne Verrutschen in dem Holzelement fasst und sich dank der sichelartigen Gewindeansätze im Übergangsbereich sehr gut in das Holzelement einschrauben lässt und mittels der im Verankerungsabschnitt angeordneten weiteren sichelartigen Gewindeansätze klar ein spürbares Erschwernis beim weiteren Einschrauben dieses Bereichs erzeugt.

Hinsichtlich des Griffs des zweiten Gewindeabschnitts im Holzelement und der guten Einschraubbarkeit, was eigentlich diametral verlaufende Massnahmen erfordern müsste, kann ein guter Kompromiss befunden werden, wenn die sichelartigen Gewindeansätze im Übergangsbereich den Durchmesser im Bereich des zweiten Gewindeabschnitts unterschreiten.

Das Erschwernis beim Einschrauben des Verankerungsabschnitts in das Holzelement (also eigentlich zum Verhindern des Einschraubens des Verankerungsabschnitss in das Holzelement) sieht es eine besonders vorteilhafte Ausgestaltung der vorliegenden Erfindung vor, dass der Verankerungsabschnitt mehrere durch einen Gewindeabschnitt unterteilte Bereiche mit sicherartigen Gewindeansätzen umfasst, wobei der Durchmesser dieser Bereiche in Richtung zum Schraubenkopf hin zunimmt und wobei vorzugsweise mindestens der letzte dieser vor dem Schraubenkopf angeordneten Bereiche einen Durchmesser aufweist, der grösser als der Durchmesser des benachbarten Gewindeabschnitts ist.

Für das sichere Einschrauben wird es ebenfalls als weiter vorteilhaft angesehen, wenn sich der Eintrittsbereich und der Übergangsbereich sowie der Übergangsbereich und der Befestigungsbereich nicht überlappen. Ebenso kann es zur leichten Einschraubbarkeit beitragen, wenn der Übergangsbereich zumindest teilweise innerhalb eines konisch verlaufenden Bolzenschaftbereichs angeordnet ist.

Für die gute Einschraubbarkeit nach dem Aufsetzung der Verbundschraube auf das Holzelement hat es sich als vorteilhaft erwiesen, wenn die erste Gewindesteigung im Bereich von etwa der Hälfte der zweiten Gewindesteigung liegt. Typische Steigungen des Gewindes gegenüber der Senkrechten zur Längsachse betragen etwa 10 bis 20 Grad.

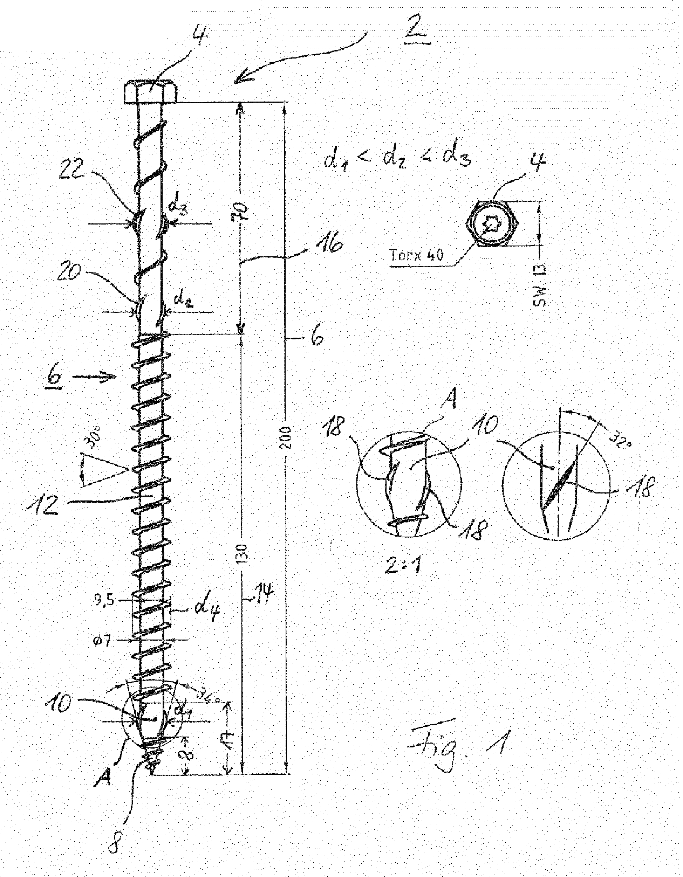

Bevorzugte Ausführungsbeispiele der vorliegenden Erfindung werden nachfolgend anhand der Zeichnung näher erläutert. Dabei zeigt die Figur eine schematische Ansicht auf einer Verbundschraube 2 für ein hier nicht weiter dargestelltes Holz-Beton-Tragwerk mit Bemassung. Die Verbundschraube 2 weist im wesentlich fünf Bereiche auf: einen Schraubenkopf 4 und einen in vier Bereiche gegliederten Bolzenschaft 6, nämlich einen dreiteiligen Holzeingriffgewindeabschnitt 14 und einen Verankerungsabschnitt 16. Der Bolzenschaft 6 umfasst dabei in dem Holzeingriffgewindeabschnitt am vom Schraubenkopf 4 entfernten Ende einen Eintrittsbereich 8, einen daran anschliessenden Übergangsbereich 10 und einen daran anschliessenden Befestigungsbereich 12. Der Holzeingriffgewindeabschnitt 14 wird dabei in der Regel voll in ein Holzelement (hier nicht weiter hergestellt) eingeschraubt und der Verankerungsabschnitt 16 später bei der Erzeugung des Betonelements (hier nicht weiter hergestellt) von Beton umgossen.

Der Holzeingriffgewindesabschnitt 14 weist auf der vom Schraubenkopf 4 abgewandten Seite des Bolzenschafts 6 in dem konisch verlaufenden Eintrittsbereich 8 einen ersten Gewindesabschnitt mit einer ersten Gewindesteigung auf. Dabei ist die Gewindesteigung hier so gewählt, dass die Verbundschraube 2 möglichst sofort beim Aufsetzung in das Holzelement eingeschraubt werden kann und nicht verrutscht, was eine besondere Relevanz aufweist, da die Verbundschraube 2 häufig auch unter Winkeln im Bereich von 45° in das Holzelement eingeschraubt werden muss. Weiter befindet sich im mittleren Bereich des Holzeingriffsgewindeabschnitts 14 der mit einem weitgehend konstanten Durchmesser d₄ verlaufende Befestigungsbereich 12, der einen zweiten Gewindeabschnitt mit einer zweiten Gewindesteigung aufweist, wobei die erste Gewindesteigung kleiner als die zweite Gewindesteigung ist. Dieser Befestigungsbereich 12 - nomen est omen - dient im Wesentlichen der statisch belastbaren Befestigung der Verbundschraube 2 im Holzelement. Die hier grössere Gewindesteigung erleichtert das Einschrauben hinsichtlich der aufwendenden Schraubendrehungen.

Zwischen dem Eintrittsbereich 8 und dem Befestigungsbereich 12 ist der Übergangsbereich 10 angeordnet. Dieser Übergangsbereich 10 weist sichelartig geformte Gewindeansätze 18 auf, deren Verlauf eine Längsausdehnung in Richtung der Längsachse des Bolzenschafts 6 und eine Querausdehnung in Richtung senkrecht zu dieser Längsachse aufweisen, wobei die Längsausdehnug ein Vielfaches der Querausdehnung beträgt. Weiter sind die Gewindeansätze 18 so geformt, dass sich in diesem Bereich ein erster maximaler Durchmesser d₁ ergibt, der kleiner als der Durchmesser d₄ ist. Dieser Übergangsbereich 10 dient damit besonders dem Ausräumen des Vortriebkanals der Verbundschraube 2 ohne dabei den Eingriff des zweiten Gewindebereich im Holzelement zu hemmen.

Der Verankerungsabschnitt 16, der im Anschluss an den Holzeingriffsgewindeabschnitt 14 angeordnet ist, weist zunächst weitere sicherartige Gewindeansätze 20 und daran anschliessend in Richtung auf den Schraubenkopf 4 gesehen einen dritten Gewindebereich mit einer dritten Gewindesteigung, die grösser als die erste und zweite Gewindesteigung ist, auf. Vorliegend ist der Verankerungsabschnitt 16 durch mehrere jeweils durch einen Gewindeabschnitt unterteilte Bereiche mit sicherartigen Gewindeansätzen 20, 22 gekennzeichnet, wobei der Durchmesser d₂, d₃ dieser Bereiche in Richtung zum Schraubenkopf 4 hin zunimmt und wobei vorzugsweise mindestens der letzte dieser vor dem Schraubenkopf 4 angeordneten Bereiche einen Durchmesser d₃ aufweist, der grösser als der Durchmesser des benachbarten Gewindeabschnitts ist.

In der gezeigten Ausführungsform der Verbundschraube 2 überlappen sich der Eintrittsbereich 8 und der Übergangsbereich 10 sowie der Übergangsbereich 10 und der Befestigungsbereich 12 nicht überlappen, so dass jeder dieser Bereich für sich die ihm zugwiesene Aufgabe übernimmt. Dabei ist der Übergangsbereich 10 zumindest teilweise innerhalb eines konisch verlaufenden Bereich des Bolzenschafts 6 angeordnet. Für den an der Schraubenspitze angeordneten Eintrittsbereich 8 ist die erste Gewindesteigung so gewählt, dass sie im Bereich von etwa der Hälfte der zweiten Gewindesteigung liegt.

## Patentansprüche

1. Verbundschraube (2) für ein Holz-Beton-Tragwerk, umfassend einen Bolzenschaft (6), der eine Längsachse der Verbundschraube (2) definiert, wobei der Bolzenschaft (6) entlang der Längsachse einen angeformten Schraubenkopf (4), einen Verankerungsabschnitt (16) und einen Holzeingriffgewindeabschnitt (14) aufweist,
**dadurch gekennzeichnet, dass**
der Holzeingriffgewindesabschnitt (14)
a) auf der vom Schraubenkopf (4) abgewandten Seite des Bolzenschafts (6) in einem konisch verlaufenden Eintrittsbereich (8) einen ersten Gewindesabschnitt mit einer ersten Gewindesteigung aufweist,
b) in einem mit weitgehend konstantem Durchmesser verlaufenden Befestigungsbereich (12) einen zweiten Gewindeabschnitt mit einer zweiten Gewindesteigung aufweist, wobei die erste Gewindesteigung kleiner als die zweite Gewindesteigung ist, und
c) in einem Übergangsbereich (10), der den Eintrittsbereich (8) und den Befestigungsbereich (12) verbindet, sichelartige Gewindeansätze (18) aufweist, deren Verlauf eine Längsausdehnung in Richtung der Längsachse des Bolzenschafts (6) und eine Querausdehnung in Richtung senkrecht zur Längsachse aufweisen, wobei die Längsausdehnug ein Vielfaches der Querausdehnung beträgt, und
d) der Verankerungsabschnitt (16) im Anschluss an den Holzeingriffsgewindeabschnitt (14) zunächst weitere sicherartige Gewindeansätze (20) und daran anschliessend in Richtung auf den Schraubenkopf (4) gesehen einen dritter Gewindebereich mit einer dritten Gewindesteigung, die grösser als die erste und zweite Gewindesteigung ist, aufweist.

2. Verbundschraube nach Anspruch 1,
**dadurch gekennzeichnet, dass**
die sichelartigen Gewindeansätze (18) im Übergangsbereich den Durchmesser (d₄) im Bereich des zweiten Gewindeabschnitts unterschreiten.

3. Verbundschraube nach Anspruch 1 oder 2,
**dadurch gekennzeichnet, dass**
der Verankerungsabschnitt (16) mehrere durch einen Gewindeabschnitt unterteilte Bereiche mit sicherartigen Gewindeansätzen (20, 22) umfasst, wobei der Durchmesser dieser Bereiche in Richtung zum Schraubenkopf hin zunimmt und wobei vorzugsweise mindestens der letzte dieser vor dem Schraubenkopf (4) angeordneten Bereiche einen Durchmesser aufweist, der grösser als der Durchmesser des benachbarten Gewindeabschnitts ist.

4. Verbundschraube nach einem der Ansprüche 1 bis 3,
**dadurch gekennzeichnet, dass**
sich der Eintrittsbereich (8) und der Übergangsbereich (10) sowie der Übergangsbereich (10) und der Befestigungsbereich (12) nicht überlappen.

5. Verbundschraube nach einem der Ansprüche 1 oder 4,
**dadurch gekennzeichnet, dass**
der Übergangsbereich (10) zumindest teilweise innerhalb eines konisch verlaufenden Bolzenschaftbereichs angeordnet ist.

6. Verbundschraube nach einem der Ansprüche 1 bis 5,
**dadurch gekennzeichnet, dass**
die erste Gewindesteigung im Bereich von etwa der Hälfte der zweiten Gewindesteigung liegt.
